# EUROPÄISCHE PATENTANMELDUNG

(11) **EP 1 184 139 A2**
(43) Veröffentlichungstag der Anmeldung: **06.03.2002**
(21) Anmeldenummer: 01118560.0
(22) Anmeldetag: 01.08.2001
(51) Int. Cl.: B25J 9/16, G05B 19/401

(54) **Verfahren und Programmsteuersystem zum Beschichten oder Bearbeiten von Werkstücken längs toleranzbehafteter Pfade**

(30) Priorität: 11.08.2000 DE 10039442
(71) Anmelder: Dürr Systems GmbH, 70435 Stuttgart (DE)
(72) Erfinder: Meissner, Alexander, Dipl-Ing., 70193 Stuttgart (DE)
(74) Vertreter: Heusler, Wolfgang, Dipl.-Ing.

(57) **Zusammenfassung**

Beispielsweise zum Nahtabdichten von Fahrzeugkarossen (F) mit einem Roboter (R) wird dessen Bewegungsprogramm in Teilprogramm-Module für einzelne Abschnitte der Nähte unterteilt. Toleranzbehaftete Nahtabschnitte werden von einem eigenen Kamerasystem (K2) lokalisiert, das zusätzlich zu dem üblichen Kamerasystem (K1) zur Karossenlokalisierung in der Roboterstation vorgesehen ist. Während der Zeit, in der der Roboter (R) einen ersten Nahtabschnitt (BAₙ) beschichtet, wird der genaue Ort eines danach zu beschichtenden zweiten Abschnitts (BAₙ₊₁) festgestellt und das Teilprogramm der Roboterbewegung für diesen zweiten Abschnitt entsprechend korrigiert.

## Beschreibung

Die Erfindung betrifft ein Verfahren zum Beschichten oder Bearbeiten von Werkstücken längs toleranzbehafteter Pfade und ein zu seiner Ausführung geeignetes Programmsteuersystem gemäß dem Oberbegriff der unabhängigen Patentansprüche.

Ein typischer Anwendungsfall hierfür ist das automatische Abdichten von Schweißnähten an Fahrzeugkarossen während des Beschichtungsprozesses. Üblicherweise werden zu diesem Zweck die Rohkarossen in eine Roboterstation gefördert, wo z.B. mit Meßkameras zunächst die genaue Position der zugeführten Karossen in Bezug auf das den Bewegungsprogrammen des Roboters zugrundeliegende Koordinationssystem festgestellt wird. Stattdessen kann der erforderliche Bezug zwischen Karosse und Roboterstation auch durch definierte Positionierung (Zurechtrücken) der Karosse hergestellt werden. Nachdem die gespeicherten Bewegungsprogramme aufgrund dieser Karossenlokalisierung im erforderlichen Maße für alle abzufahrenden Pfade korrigiert worden sind, bewegt der Roboter sein Applikationswerkzeug an den abzudichtenden Nähten entlang, um sie mit dem Abdichtmaterial zu beschichten.

Ein Problem ist hierbei, daß zwar das bekannte Karossenlokalisierungssystem die genaue Position der Karosse in der Roboterstation angibt, soweit es sich um toleranzfreie Bestandteile handelt, die genaue Position der abzudichtenden Nähte innerhalb der Karosse aber wegen lokaler Toleranzen, die sich unvermeidbar beim Zusammenschweißen großer Bauteile ergeben können, unbekannt ist. Mit anderen Worten ist der Ort der Schweißnähte nur ungefähr bekannt. Zum Ausgleich der lokalen Karossentoleranzen mußte das Nahtabdichtmaterial bisher in einer Bahn aufgetragen werden, die wesentlich breiter ist als für die Naht eigentlich erforderlich wäre. Diese überbreite Nahtabdichtspur hat den Nachteil übermäßigen Materialverbrauchs. Überdies ist häufig auch noch manuelles Nacharbeiten erforderlich. Ähnliche Probleme treten nicht nur beim Beschichten auf, sondern generell in allen Fällen, bei denen automatische Arbeiten längs vorgegebener Pfade an Werkstücken mit lokalen Toleranzen durchgeführt werden. Sie waren bisher vor allem dann nicht ohne weiteres lösbar, wenn keine einfache Online-Konturverfolgung während der Bearbeitung beispielsweise mit einem sich mit dem Werkzeug bewegenden Sensor und sofortige Rückkoppelung des Meßergebnisses auf die Robotersteuerung möglich ist. Die Lösung dieses Problems wird dadurch erschwert, daß in der Regel keine Verzögerung des Arbeitsprozesses zugelassen werden kann.

Demgemäß liegt der Erfindung die Aufgabe zugrunde, ein Verfahren bzw. System anzugeben, die es ohne unzulässigen Zeitverlust ermöglichen, daß das Werkzeug ungeachtet lokaler Toleranzen stets genau an den vorgegebenen Pfaden entlangbewegt werden kann.

Diese Aufgabe wird durch die Merkmale der Patentansprüche gelöst.

Die Erfindung ermöglicht eine genaue Werkzeubewegung längs der vorgegebenen Pfade, so daß beispielsweise beim Nahtabdichten eine erhebliche Einsparung von Abdichtmaterial erreicht wird, ohne daß hierfür Nachteile wie beispielsweise das Erfordernis eines sich am Roboter mit dem Werkzeug bewegenden, in vielen Fällen störenden Meßkopfes oder eine Begrenzung der Bewegungsgeschwindigkeit in Kauf genommen werden müssen. Wesentlich ist vor allem, daß sich kein Taktzeitverlust beim Serienbetrieb ergibt, da die Ortsmessung für nachfoglende toleranzbehaftete Pfade erfolgen kann, während das Werkzeug bereits einen vorhergehenden Pfadabschnitt abfährt, wobei es zweckmäßig ist, das Bewegungsprogramm in Teilprogrammmodule für einzelne aufeinanderfolgende Pfadabschnitte zu unterteilen.

Die Zeit, die der Roboter für die Bearbeitung eines Pfadabschnitts benötigt, kann also für die ebenfalls eine gewisse Zeit erfordernde Vermessung des jeweils nächsten Pfadabschnitts genutzt werden.

Als Bezugssystem kann zweckmäßig ein kartesisches Koordinatensystem dienen, das in fester Beziehung sowohl zu dem in bekannter Weise der Roboterbewegung zugrundeliegenden Koordinatensystem als auch zu dem den Ort des zugeführten Werkstücks als Ganzes definierenden Lokalisierungssystem steht. Die den festgestellten Toleranzen entsprechende Korrektur des Bewegungsprogramms oder der Programmmodule ist auf einfache Weise durch Verschieben der gespeicherten Koordinatenwerte (Bahnstützpunkte) der Robotersteuerung relativ zu dem Bezugssystem möglich.

Die genaue Lokalisierung der toleranzbehafteten Pfade kann zweckmäßig durch Bildverarbeitung der Bilder eines Kamerasystems erfolgen, das auf die zu bearbeitenden Pfade auf dem Werkstück gerichtet wird, im Fall des Nahtabdichtens also die Schweißnähte aufnimmt. In anderen Anwendungsfällen, beispielsweise zum Applizieren von Klebebahnen auf toleranzbehaftete Oberflächenbereiche oder zum Ausführen von Arbeiten längs toleranzbehafteter Werkstückkanten, können sonstige charakteristische Merkmale längs der von der Maschine abzufahrenden Pfade oder auch auf den benachbarten Werkstückbereichen mit optischen Systemen aufgenommen oder auf sonstige Weise festgestellt werden, woraus dann die erforderlichen Steuerdaten für die Korrektur der Bewegungsprogramme gewonnen werden.

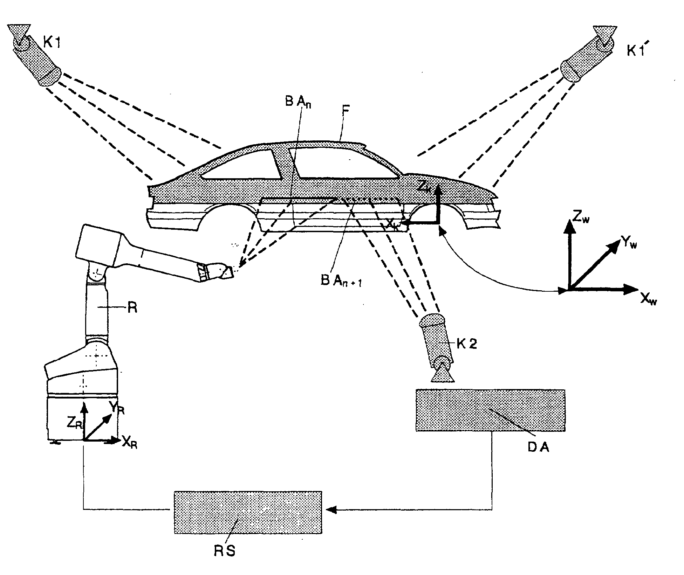

An dem in der Zeichnung dargestellten Beispiel der robotergeführten Abdichtung der Schweißnähte von Fahrzeugkarossen wird die Erfindung näher erläutert.

In der Zeichnung ist schematisch eine Roboterstation dargestellt, die ein durch die Koordinaten X_{W}, Y_{W}, Z_{W} definiertes Bezugssystem bildet. Die genaue räumliche Lage des Beschichtungsroboters R und des seinen Bewegungsprogrammen zugrundeliegenden Koordinatensystems X_{R}, Y_{R}, Z_{R} in Bezug auf das Bezugssystem der Station ist bei der ursprünglichen Installation des Roboters durch die üblichen Vermessungsmethoden festgestellt worden. Weitere Bestandteile der Station sind ein erstes Kamerasystem K1,K1', das in an sich bekannter Weise zum Lokalisieren der zu beschichtenden Fahrzeugkarosse F dient, ein zweites Kamerasystem K2 zum Lokalisieren toleranzbehafteter Schweißnähte, eine Bild- und Datenverarbeitungseinheit DA und die Robotersteuerung RS. Ebenso wie beim Roboter ist auch die räumliche Lage der Kamerasysteme K1 und K2 durch entsprechende Vermessungen koordinatenmäßig in definierter Weise auf das Bezugssystem X_{W}, Y_{W}, Z_{W} bezogen. Dasselbe gilt für alle sonstigen räumlich definierten Objekte in der Roboterstation.

Im Betrieb wird zunächst mit dem üblicherweise stationären Kamerasystem K1, K1' die Karosse F, nachdem sie in die Station gefördert worden ist, in der schon bisher bekannten und üblichen Weise lokalisiert, d.h. es wird durch Aufnahme nicht toleranzbehafteter Elemente (z.B. Bohrungen an definierten Stellen) ihre genaue Position in dem Bezugssystem der Station festgestellt.

Wie eingangs schon erwähnt wurde, kann die Lokalisierung der Werkstücks statt mit Kameras auch durch definiert Positionierung in der Roboterstation oder dgl. erfolgen.

Es sei angenommen, daß erst ein nicht toleranzbehafteter Bahnabschnitt BAₙ der zu beschichtenden Schweißnähte und danach ein toleranzbehafteter Bahnabschnitt BAₙ₊₁ mit Abdichtmaterial beschichtet werden soll. Da der genaue Ort des Abschnitts BAₙ bereits bekannt ist, kann der Roboter hier sofort mit der Arbeit beginnen (andernfalls wäre zunächst die Nahtlokalisierung in der nachfolgend beschriebenen Weise erforderlich). Während des Abdichtens der Naht im Abschnitt BAₙ wird mit dem zweiten Kamerasystem K2, das hier als stationär angenommen sei, aber auch mobil und beispielsweise an einem separaten Meßroboter montiert sein könnte, der genaue Ort des Bahnabschnitts BAₙ₊₁ festgestellt. Dieser Vorgang wird dadurch erleichtert, daß auch der Ort der toleranzbehafteten Abschnitte aufgrund des gespeicherten Typs der zugeführten Karossen bereits ungefähr bekannt ist und das Kamerasystem K2 diese Abschnitte deshalb nicht erst suchen muß. Die für die genaue Lokalisierung und für die Bild- und Datenverarbeitung erforderliche Zeit stellt keinen Verlust an Prozeßzeit dar, da die Vermessung parallel zu der Beschichtung des Abschnitts BAₙ erfolgt.

Das Ergebnis der Lokalisierung des Abschnitts BAₙ₊₁ wird der Robotersteuerung RS in Form von Daten zugeführt, die ein Maß für die Abweichung der festgestellten, tatsächlichen Bahnorte von den gespeicherten, für jeden Karossentyp programmmäßig vorgesehenen Bahnorten sind. Mit diesen Abweichungsdaten kann das für den Abschnitt BAₙ₊₁ vorgesehene Teilprogrammmodul des Bewegungsprogramms des Roboters parallel zu der Beschichtung des Abschnitts BAₙ im erforderlichen Maße korrigiert werden, so daß der Roboter dann sofort auf dem Abschnitt BAₙ₊₁ weiter arbeiten kann. Die Bahnkorrektur erfolgt durch entsprechendes Verschieben der Prograltimstützpunkte, durch deren Interpolation die Roboterbahn mit der realen Schweißnaht in Übereinstimmung gebracht wird. Der beschriebene Vorgang wird zumindest für alle toleranzbehafteten Nahtbereiche und für alle weiteren in die Station geförderten Karossen fortgesetzt.

## Patentansprüche

1. Verfahren zum Beschichten oder Bearbeiten von serienweise einer programmgesteuerten Maschine zugeführten Werkstücken mit einem Werkzeug der Maschine längs vorgegebener, jedoch zumindest in Teilbereichen toleranzbehafteter Pfade auf dem Werkstück,
wobei der Ort des zugeführten Werkstücks (F) in Bezug auf die Maschine (R) in einem Bezugssystem (X_{W}, Y_{W}, Z_{W}) definiert wird und das Werkzeug unter Steuerung durch ein gespeichertes Bewegungsprogramm, das den Pfaden (BA) auf dem Werkstück entspricht und den Ort des Werkstücks in dem Bezugssystem berücksichtigt, relativ zu dem Werkstück längs der Pfade bewegt wird,
**dadurch gekennzeichnet, daß** der Ort der toleranzbehafteten Pfade (BAₙ₊₁) in Bezug auf das Bezugssystem von einem Mess- oder Sensorsystem (K2) festgestellt wird, das von der Werkzeugbewegung entkoppelt ist,
und das Bewegungsprogramm während der Beschichtung oder Bearbeitung des Werkstücks aufgrund des von dem entkoppelten System (K2) festgestellten Ortes der Pfade zum Ausgleich von Toleranzen selbsttätig korrigiert wird.

2. Verfahren nach Anspruch 1, **dadurch gekennzeichnet, daß** der definierte Ort des Werkstücks (F) in dem Bezugssystem durch ein optisches Lokalisierungssystem (K1) ermittelt wird, das auf nicht toleranzbehaftete Werkstückteile anspricht, und daß der Ort der toleranzbehafteten Pfade durch ein zusätzliches optisches Meß- oder Sensorsystem (K2) festgestellt wird.

3. Verfahren nach Anspruch 2, **dadurch gekennzeichnet, daß** das zusätzliche System (K2) ein stationäres oder mobiles Kamerasystem ist, und daß durch Datenverarbeitung der Bildinformationen des Kamerasystems Steuerdaten zur Korrektur des Bewegungsprogramms der Maschine (R) gewonnen werden.

4. Verfahren nach einem der Ansprüche 1 bis 3, **dadurch gekennzeichnet, daß** das Bewegungsprogramm in Teilprogramme für aufeinanderfolgende Pfade (BA) auf dem Werkstück (F) segmentiert wird, und daß während der Bewegung des Werkzeugs längs eines ersten Pfades (BAₙ) gleichzeitig der Ort eines nachfolgenden zweiten Pfades (BAₙ₊₁) gemessen und das Teilprogramm für diesen zweiten Pfad zum Ausgleich von Toleranzen korrigiert wird.

5. Verfahren nach Anspruch 4, **dadurch gekennzeichnet, daß** das Bewegungsprogramm in Teilprogramme für nicht toleranzbehaftete Pfade und solche für toleranzbehaftete Pfade segmentiert wird und der Ort eines toleranzbehafteten, nachfolgenden Pfades (BAₙ₊₁) festgestellt wird, während das Werkzeug sich längs eines nicht toleranzbehafteten Pfades (BAₙ) bewegt.

6. Programmsteuerungssystem zum Beschichten oder Bearbeiten von serienweise einer programmgesteuerten Maschine zugeführten Werkstücken mit einem Werkzeug der Maschine längs vorgegebener, jedoch zumindest in Teilbereichen toleranzbehafteter Pfade auf dem Werkstück,
mit einem insbesondere stationären optischen Lokalisierungssystem (K1), mit dem der Ort des zugeführten Werstücks (F) in Bezug auf die Maschine in einem Bezugssystem (X_{W}, Y_{W}, Z_{W}) definierbar ist,
**dadurch gekennzeichnet, daß** ein zusätzliches Meß- oder Sensorsystem (K2) vorgesehen ist, dessen Ort von der Werkzeugbewegung entkoppelt ist, und mit dem der Ort der toleranzbebehafteten Pfade (BAₙ₊₁) in Bezug auf das Bezugssystem feststellbar ist,
und daß eine Datenverarbeitungs- und Steuereinrichtung (DA, RS) vorgesehen ist, mit der das gespeicherte Bewegurigsprogramm der Maschine (R) in Abhängigkeit von den Informationen des zusätzlichen Meß- und Sensorsystems (K2) änderbar ist.

7. Programmsteuersystem nach Anspruch 6, **dadurch gekennzeichnet, daß** das Bewegungsprogramm in Teilprogrammmodule für aufeinanderfolgende, vorbestimmte Abschnitte (BAₙ, BAₙ₊₁) der Pfade auf dem Werkstück (R) segmentiert ist.
